# EUROPÄISCHE PATENTSCHRIFT

(11) **EP 1 038 708 B1**
(45) Veröffentlichungstag und Bekanntmachung des Hinweises auf die Patenterteilung: **19.02.2003**
(21) Anmeldenummer: 00106108.4
(22) Anmeldetag: 21.03.2000
(51) Int. Cl.: B60J 7/10

(54) **Blachenabschluss**
Finishing part for cover
Elément de finition pour bache

(30) Priorität: 23.03.1999 CH 54999
(43) Veröffentlichungstag der Anmeldung: 27.09.2000
(73) Patentinhaber: Büchel Blachen AG, 9495 Triesen (LI)
(72) Erfinder: Büchel, Albert, 9495 Triesen (LI)
(74) Vertreter: Kaminski, Susanne

(56) Entgegenhaltungen:
- EP-A- 0 858 930
- DE-A- 3 136 897
- FR-A- 2 666 057

## Beschreibung

Die Erfindung bezieht sich auf einen Blachenabschluss nach dem in DE 3 136 897 A offenbarten Oberbegriff des Anspruches 1.

Lastfahrzeuge, deren Laderäume mit Blachen nach aussen abgeschlossen sind, haben häufig an der Rückseite der Ladefläche eine Hebebühne, die als Teil der Abschlussfläche bzw. als Ladebordwand vertikal nach oben an den Laderaum anlegbar ist. Die Blachenflächen werden von mit dem Brückenrahmen verbundenen Pfosten und oben daran anschliessenden Trägern gehalten. An der Rückseite der Ladefläche ist ein Abschlussrahmen mit zwei Eckpfosten und einem Träger angeordnet. Die vom Abschlussrahmen berandete Abschlussfläche wird von oben her durch eine Blachenrückwand und von unten her durch die vertikal ausgerichtete Hebebühne abgeschlossen. Um zu gewährleisten, dass die Blachenrückwand als eben Fläche nach unten hängt, ist der Blachenrückwand im Bereich ihres freien Endes ein Keder, bzw. ein in einen Saum eingesetzter Stab, zugeordnet. Um die Abschlussfläche vollständig abzuschliessen, ist die Blachenrückwand und die Hebebühne im geschlossenen Zustand überlappend ausgebildet. Im Überlappungsbereich wird die Blachenrückwand zwischen den Eckpfosten und der Hebebühne festgeklemmt. Um das Eintreten von Regenwasser zwischen der Blachenrückwand und der Hebebühne möglichst zu verhindern, wird an der Blachenrückwand direkt über dem freien Ende der Hebebühne ein etwas nach aussen stehender Blachenlappen angebracht. Dieser Blachenlappen steht aufgrund eines weiteren Keders, bzw. eines unter dem Lappen angeordneten Stabes, nach aussen.

Es hat sich nun aber gezeigt, dass Blachenrückwände mit Keder und abstehenden Blachenlappen den Innenraum nicht genügend dicht abschliessen. Beim Fahren entstehen am Heck Ablösungswirbel, die mit stark wechselnden, auf die Blachenrückwand wirkenden Kräften verbunden sind. Durch die Angriffsmöglichkeit am Blachenlappen werden diese Kräfte noch verstärkt. Die Nachgiebigkeit des Blachenmaterials ermöglicht Flatterbewegungen, die in den Klemmbereichen zwischen den Eckpfosten und der Hebebühne derart hohe Zerrkräfte erzeugen, dass sich die Blachenrückwand aus der richtigen Lage verschiebt. Dabei entstehen im Kontaktbereich zu den seitlichen Blachenwänden Eintrittsöffnungen, durch die Regenwasser ins Innere des Laderaumes gelangt. Das Entstehen von Eintrittsöffnungen kann auch durch die Verschnürungs- oder Einsteckverbindungen zwischen den seitlichen und den heckseitigen Blachenwänden nicht vermieden werden. Auch im Bereich des nach aussen stehenden Blachenlappen gelangt Regenwasser in den Überlappungsbereich und anschliessend in den Laderaum.

Ein weiterer Nachteil der bekannten Lösungen, insbesondere jener mit dem abstehenden Blachenlappen, besteht darin, dass das Blachenmaterial durch das Flattern sehr stark beansprucht wird und entsprechend schnell ersetzt werden muss.

Der Erfindung liegt nun die Aufgabe zugrunde, einen Blachenabschluss zu finden, der ein dichtes Verschliessen ermöglicht und insbesondere auch eine lange Lebensdauer des Blachenabschlusses gewährleistet. Um das gewohnte Öffnen und Schliessen zu ermöglichen, soll die Blache mit dem Blachenabschluss vorzugsweise aufrollbar sein.

Diese Aufgabe wird durch die Merkmale des Anspruches 1 gelöst. Die abhängigen Ansprüche beschreiben alternative bzw. vorteilhafte Ausführungsvarianten.

Bei der Lösung der Aufgabe wurde erkannt, dass ein Blachenabschluss in der Form eines Profilelementes mit einem Kontaktschenkel und einem Überdeckungsschenkel, der als Wetternase dient, über die gesamte Fahrzeugbreite eine Steifigkeit erzielbar macht, die ein Flattern der Blache im Bereich des freien Endes der Hebebühne verhindert. Insbesondere das Ersetzen des flexiblen Blachenlappens durch den Überdeckungsschenkel des Profilelementes führt zu einer massgeblichen Reduktion der maximalen Zerrkräfte an der Blache, was sowohl eine erhöhte Lebensdauer gewährleistet, als auch ein Verschieben bzw. Verzerren der Blache in den Kontaktbereichen mit den Blachen-Seitenwänden und somit das Entstehen von Eintrittsöffnungen für Regenwasser verhindert.

Die Verbindung der Blache mit dem Profilelement erfolgt vorzugsweise über eine Kedernut, die im Verbindungsbereich der beiden Schenkel angeordnet ist und in die das freie Blachenende mit einem Keder einsetzbar ist. Diese Verbindung kann mit kleinem Aufwand wasserdicht ausgebildet werden. Um auch zwischen der Blache bzw. dem daran befestigten Blachenabschluss und der Hebebühne einen dichten Abschluss zu gewahrleisten, ist vorzugsweise am Kontaktschenkel eine Dichtung angeordnet, die sich im wesentlichen über dessen gesamte Länge erstreckt und im Schliesszustand dicht an der Hebebühne anliegt. Zur Aufnahme der Dichtung umfasst das Profilelement eine Dichtungsnut. Die Dichtung ist vorzugsweise als Moosgummiprofil ausgebildet. In einer alternativen Ausführung besteht die Dichtung aus eine Gummilippe, die in der Dichtungsnut verankert ist, aber aus der Dichtungsnut hervorsteht und vorzugsweise über den Kontaktschenkel hinausragt. In dieser Form dient die Gummilippe als Dichtung und gleichzeitig als Schutz für die Dachfläche der Blache vor Verletzung durch Ecken des Kontaktschenkels.

In einer weiteren Ausführungsform umfasst der Kontaktschenkel beidseits aussen Verbindungselemente, wie gegen den Abschlussrahmen vorstehende Bolzen, die im Schliesszustand eine formschlüssige Verbindung mit dem Abschlussrahmen erzielbar machen. Dadurch erhält der Abschlussrahmen im verschlossenen Zustand eine deutlich höhere Stabilität. Die Verbindungselemente können auch im Abschlussrahmen befestigt sein und durch Ringösen im Blachenabschluss oder durch Bohrungen im Profilelement gesteckt werden, um im Schliesszustand eine formschlüssige Verbindung zu erzielen. Die Verbindungselemente können auch als Haken oder Bügel ausgebildet sein. Sie können auch so lang sein, dass sie durch das Profilelement durchgehen und in die im Schliesszustand als Rückwand dienende Hebebühne ragen, was zu einer höheren Stabilität beiträgt. Die Scherkräfte auf die Verbindungselemente werden dabei gleichermassen von Abschlussrahmen und Hebebühne aufgenommen.

Um das Aufrollen der Blache mit dem erfindungsgemässen Blachenabschluss zu ermöglichen, stehen die Schenkel des Profilelementes vorzugsweise nicht mehr als 15cm, insbesondere aber nicht mehr als im wesentlichen 8cm von ihrem gemeinsamen Verbindungsbereich vor. Wenn der Kontaktschenkel Einhängelemente zum Anhängen des Profilelementes am horizontalen Träger des Abschlussrahmens umfasst, so kann beim Öffnen gegebenenfalls auf ein Einrollen verzichtet werden. Die Einhängelemente sind vorzugsweise im Bereich des freien Endes des Kontaktschenkels angeordnet und insbesondere als Bohrungen, oder gegebenenfalls als vorstehende Ringe, ausgebildet.

Die Zeichnungen erläutern die Erfindung anhand von Ausführungsbeispielen. Dabei zeigen
- Fig. 1: eine perspektivische Darstellung einer Blache mit einem Blachenabschluss und einer daran anliegenden Hebebühne;
- Fig. 2a: eine perspektivische Darstellung eines Profilelementes gemäss Fig. 1 mit dem einsetzbaren Keder und der einsetzbaren Dichtung;
- Fig. 2b und 2c: jeweils einen Querschnitt durch eine alternative Ausbildungsform des Profilelementes und
- Fig. 3: eine Teil-Ansicht der Rückseite des Laderaumes mit einem schematisch auch im Querschnitt dargestellten Profilelement.

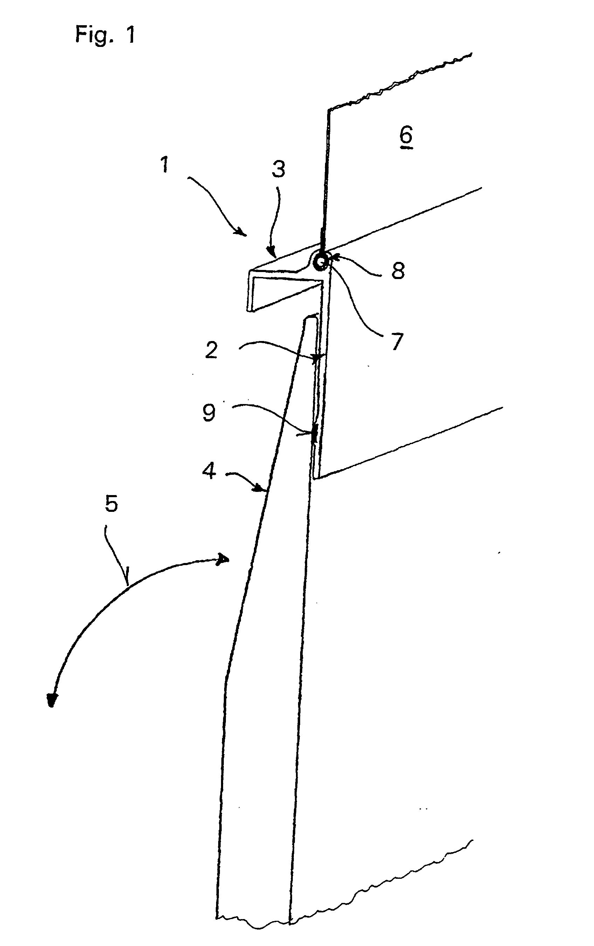

Fig. 1 zeigt ein Profilelement 1 mit einem Kontaktschenkel 2 und einem Überdeckungsschenkel 3. Im verschlossenen Zustand liegt eine Hebebühne 4 mit ihrem freien Ende an einem Teilbereich des Kontaktschenkels 2 an. Die Hebebühne ist von einer nicht dargestellten Lagerungs- und Betätigungseinrichtung gemäss dem Bewegungspfeil 5 auf- und abbewegbar. Im Schliesszustand wird das freie Ende der Hebebühne 4 vom Überdeckungsschenkel 3 dachförmig überdeckt. Dazu ist der Überdeckungsschenkel im Querschnitt L-förmig und steht im Schliesszustand im wesentlichen horizontal über die Hebebühne vor und erstreckt sich anschliessend im wesentlichen vertikal nach unten. Dieser Überdeckungsschenkel kann aber auch nach oben gerichtet sein; wesentlich ist seine Funktion als Wetternase. Die Blache 6 umfasst am freien Blachenende ein Keder 7, das mit dem darum herum geführten Blachenbereich in eine Kedernut 8 des Profilelementes 2 einsetzbar ist. Um ein Verrutschen des Keders 7 und der Blache 6 in der Kedernut 8 zu verhindern, sind gegebenenfalls Nieten durch die Berandung der Kedernut 8 und den Keder eingesetzt. Eine Dichtung 9 steht vom Kontaktschenkel 2 gegen die geschlossene Hebebühne 4 vor.

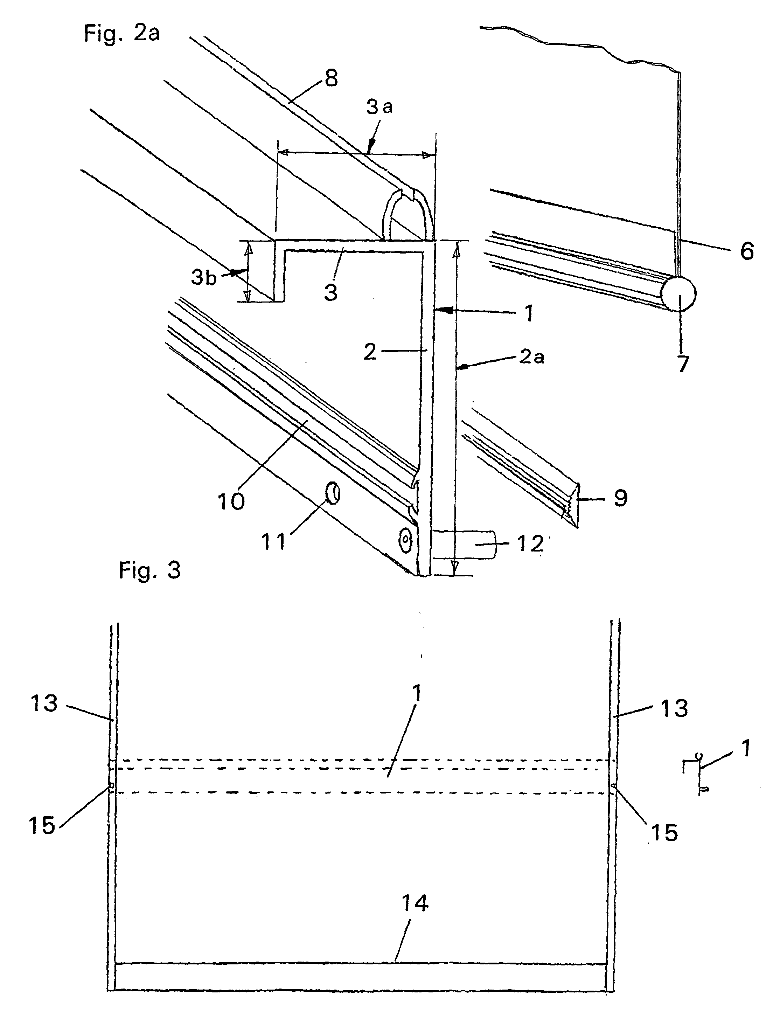

Gemäss Fig. 2a ist zur Aufnahme der Dichtung 9, die vorzugsweise als Moosgummiprofil ausgebildet ist, am Kontaktschenkel 2 eine Dichtungsnut 10 vorgesehen. Der Keder 7 ist am freien Ende der Blache 6 vorzugsweise in einem verschweissten Saum aufgenommen. Der verschweisste Saum mit dem Keder 7 wird von der Seite her in die Kedernut 8 eingeführt, wobei der Austrittsspalt aus der Kedernut 8 so schmal ist, dass lediglich die Blache 6 herausgeführt werden kann, der Keder 7 aber darin festsitzt.

Um das Aufrollen der Blache 6 zu ermöglichen, stehen die Schenkel 2, 3 des Profilelementes 1 vorzugsweise nicht mehr als 15cm, insbesondere aber nicht mehr als im wesentlichen 8cm von ihrem gemeinsamen Verbindungsbereich vor. Der Kontaktschenkel 2 erstreckt sich im Querschnitt über eine Länge 2a von 5 bis 15cm, vorzugsweise aber im wesentlichen von 8cm. Der Überdeckungsschenkel 3 erstreckt sich im Querschnitt vom Kontaktschenkel weg über eine erste Länge 3a von 2 bis 7cm, vorzugsweise aber im wesentlichen von 4cm, und senkrecht dazu über eine zweite Länge 3b von 1 bis 4, vorzugsweise von im wesentlichen 2.5cm.

Wenn der Kontaktschenkel 2 Einhängelemente 11 zum Anhängen des Profilelementes 1 am horizontalen Träger des Abschlussrahmens umfasst, so kann beim Öffnen gegebenenfalls auf ein Einrollen verzichtet werden. Die Einhängelemente 11 sind vorzugsweise im Bereich des freien Endes des Kontaktschenkels 2 angeordnet und insbesondere als Bohrungen, gegebenenfalls als vorstehende Ringe oder als Haken ausgebildet.

In einer vorteilhaften Ausführungsform umfasst der Kontaktschenkel 2 beidseits aussen je mindestens ein Verbindungselement 12, beispielsweise gegen den Abschlussrahmen vorstehende Bolzen, die im Schliesszustand eine formschlüssige Verbindung mit dem Abschlussrahmen erzielbar machen. Dadurch erhält der Abschlussrahmen im verschlossenen Zustand eine deutlich höhere Stabilität. Wenn je lediglich ein Verbindungselement vorgesehen ist, so ergibt sich die höhere Stabilität aufgrund der Verbindung der Blache 6 zum Träger des Abschlussrahmens und zum mit dem Abschlussrahmen verbundenen Kontaktschenkel 2. Wenn der Kontaktschenkel 2 beidseits je zwei Verbindungselemente 12 umfasst, so wird bereits durch die Befestigung des Profilelementes 1 am Abschlussrahmen dessen Stabilität erhöht.

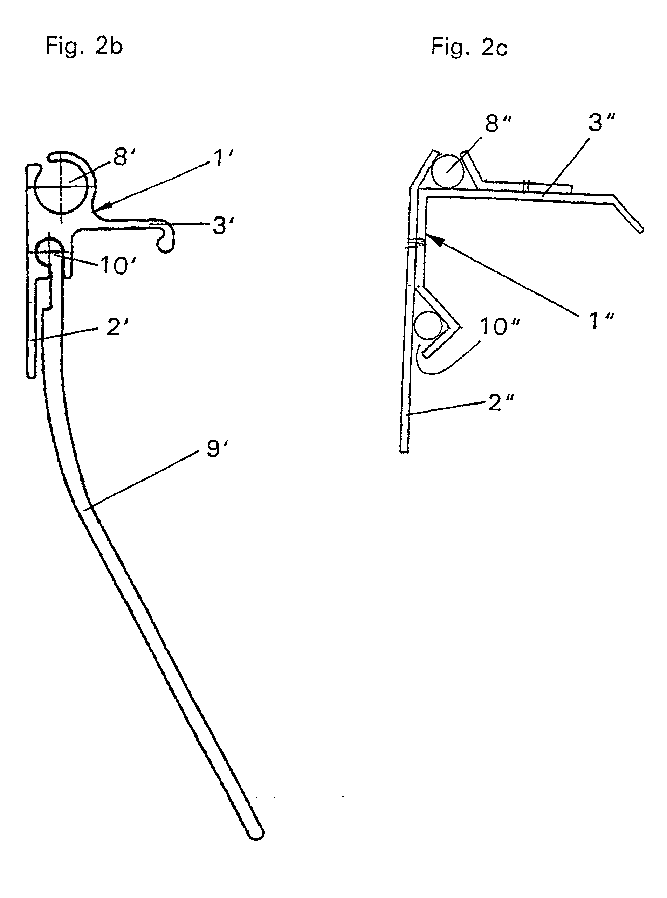

Fig. 2b zeigt ein als Gussteil geformtes Profilelement 1' im Querschnitt. Kontaktschenkel 2', Überdeckungsschenkel 3' und Kedernut 8' sind äquivalent zu Fig. 1 geformt. Die Dichtungsnut 10' ist in dieser Ausführung ähnlich der Kedernut 8' geformt. In die Dichtungsnut 10' wird die dicke Kante einer Gummilippe 9' eingeführt, die sich im wesentlichen über die gesamte Länge des Profilelementes 1' erstreckt. Die nach unten hängende Gummilippe 9' überragt den Kontaktschenkel 2' und ist vorzugsweise leicht nach aussen gebogen ausgebildet. Der Kontaktschenkel 2' kann hierbei kürzer ausgebildet sein als in dem in Fig. 1 gezeigten Profilelement 1. Die Erhöhung der Stabilität fällt zwar durch ein kürzeres Profilelement 1 geringer aus, hat aber den Vorteil einer Material- und Gewichtseinsparung. Die Hebebühne 4 liegt an der Gummilippe 9' im Bereich des Kontaktschenkels 2' gemäss Fig. 1 an, wodurch die Abdichtung gewährleistet wird. Durch die leichte Krümmung der Gummilippe 9' nach aussen wird die Funktion der Abdichtung noch verbessert. Die Gummilippe 9' hat auch die Funktion, die Dachfläche der Blache vor Verletzung durch Ecken des Kontaktschenkels 2' zu schützen, da zum Öffnen der Blachenrückwand das Profilelement 1 ergriffen und die Blache anstatt sie aufzurollen aus Gründen der Bequemlichkeit einfach auf die Dachfläche geworfen wird. Damit dabei die Ecken des Überdeckungsschenkel 3' die Dachfläche der Blache nicht beschädigen, können an den Stirnseiten Schutzverkleidungen vorgesehen werden oder die seitlichen Stirnseiten des Überdekkungsschenkels 3' abgerundet ausgebildet sein.

Fig. 2c zeigt ein aus Blechprofilen zusammengefügtes Profilelement 1". Kontaktschenkel 2" und Kedernut 8" sind wiederum äquivalent zu Fig. 1 geformt. Der Überdeckungsschenkel 3" weist hier eine, z.B. unter annähernd 30° geneigte Nase auf. Entscheidend ist nicht die exakte Form des Überdeckungsschenkels 3", sondern seine Funktion als Abdeckung des Überlappungsbereiches zwischen Blachenabschluss und Hebebühne 4. Die Dichtungsnut 10" ist ähnlich der in Fig. 2b gezeigten geformt und dient ebenso als Halterung für eine Gummilippe 9' (Fig.2b).

Fig. 3 zeigt die zum Abschlussrahmen gehörenden Eckpfosten 13, die am Brückenrahmen 14 befestigt sind. Um das Profilelement 1 mit den Eckpfosten 13 formschlüssig verbinden zu können, sind in den Eckpfosten beispielsweise Bohrungen 15 zum Aufnehmen der Verbindungselemente 12 ausgebildet.

Umgekehrt können die Verbindungselemente 12 an den Eckpfosten befestigt sein. Im Blachenabschluss sind dann Ösen vorgesehen, in die die Verbindungselemente 12 gesteckt werden. Die Verbindungselemente 12 können beispielsweise als Stifte, Haken oder Bügel ausgebildet sein. Anstatt den im Blachenabschluss vorgesehenen Ösen können auch Bohrungen im Profilelement vorgesehen werden. Die Verbindungselemente 12 können so ausgebildet sein, dass sie durch das Profilelement 12 durchgehen und in Ausnehmungen in der im Schliesszustand als Rückwand dienende Hebebühne 4 ragen, was zu einer höheren Stabilität beiträgt. Die Scherkräfte auf die Verbindungselemente 12 werden dabei gleichermassen von Abschlussrahmen und Hebebühne aufgenommen.

## Patentansprüche

1. Blachenabschluss zum Verschliessen einer durch einen Abschlussrahmen begrenzten Laderaum-Abschlussfläche im überlappenden Zusammenwirken mit einer im wesentlichen vertikal an die Abschlussfläche anlegbaren Hebebühne (4), **dadurch gekennzeichnet, dass** der Blachenabschluss als mit einer Blache (6) verbindbares Profilelement (1) ausgebildet ist, das mindestens einen Kontaktschenkel (2) und einen Überdeckungsschenkel (3) umfasst, wobei der Kontaktschenkel (2) im verschlossenen Zustand, d.h. bei vertikal angelegten Hebebühne, zwischen dem Abschlussrahmen und der Hebebühne (4) festlegbar, gegebenenfalls festklemmbar, ist und der Überdeckungsschenkel (3) von der Abschlussfläche weg über das freie Ende der Hebebühne (4) vorsteht.

2. Blachenabschluss nach Anspruch 1, **dadurch gekennzeichnet, dass** das Profilelement (1) zum Verbinden des Blachenabschlusses mit einer Blache (6) eine Kedernut (8) umfasst, die im Verbindungsbereich der beiden Schenkel (2, 3) angeordnet ist und in die das freie Blachenende mit einem Keder (7) einsetzbar ist.

3. Blachenabschluss nach Anspruch 1 oder 2, **dadurch gekennzeichnet, dass** der Überdeckungsschenkel (3) im Querschnitt im wesentlichen L-förmig ist, wobei sich der Überdeckungsschenkel (3) im Schliesszustand im wesentlichen horizontal von der Abschlussfläche weg und in einem Anschlussbereich nach unten geneigt erstreckt.

4. Blachenabschluss nach einem der Ansprüche 1 bis 3, **dadurch gekennzeichnet, dass** dem Kontaktschenkel (2) eine Dichtung (9) zugeordnet ist, die sich im wesentlichen über dessen gesamte Länge erstreckt und im Schliesszustand dicht an die Hebebühne (4) anliegt.

5. Blachenabschluss nach Anspruch 4, **dadurch gekennzeichnet, dass** die Dichtung (9) in einer am Kontaktschenkel (2) vorgesehenen Dichtungsnut (10) verankert ist und die Dichtung (9) als Gummilippe (9') ausgebildet ist - die vorzugsweise den Kontaktschenkel (2) überragt und in Richtung der im Schliesszustand anliegenden Hebebühne (4) gekrümmt ist.

6. Blachenabschluss nach einem der Ansprüche 1 bis 5, **dadurch gekennzeichnet, dass** am Kontaktschenkel (2) - insbesondere beidseits aussen - Verbindungselemente (12) vorgesehen sind vorzugsweise gegen den Abschlussrahmen vorstehende Bolzen, die im Schliesszustand eine formschlüssige Verbindung mit dem Abschlussrahmen erzielbar machen.

7. Blachenabschluss nach einem der Ansprüche 1 bis 5, **dadurch gekennzeichnet, dass** am Abschlussrahmen - insbesondere an Eckpfosten (13) aussen - Verbindungselemente (12) vorgesehen sind, vorzugsweise gegen den Kontaktschenkel (2) vorstehende Bolzen, die im Schliesszustand eine formschlüssige Verbindung zwischen Kontaktschenkel (2) und Abschlussrahmen und Hebebühne (4) erzielbar machen und wobei die als Verbindungselemente (12) ausgebildete Bolzen gegebenenfalls so weit vorragen, dass sie durch das Profilelement (12) hindurchgehen und gegebenenfalls in Ausnehmungen in der im Schliesszustand als Rückwand dienenden Hebebühne (4) hineinragen.

8. Blachenabschluss nach einem der Ansprüche 1 bis 7, **dadurch gekennzeichnet, dass** der Kontaktschenkel (2) Einhängelemente (11) zum Anhängen des Profilelementes (1) am horizontalen Träger des Abschlussrahmens umfasst, wobei die Einhängelemente (11) vorzugsweise im Bereich des freien Endes des Kontaktschenkels (2) angeordnet und insbesondere als Bohrungen ausgebildet sind.

9. Blachenabschluss nach einem der Ansprüche 1 bis 8, **dadurch gekennzeichnet, dass** sich der Kontaktschenkel (2) im Querschnitt über eine Länge von 5 bis 15cm, vorzugsweise aber im wesentlichen bis zu 8cm, erstreckt.

10. Blachenabschluss nach einem der Ansprüche 1 bis 9, **dadurch gekennzeichnet, dass** sich der Überdeckungsschenkel (3) im Querschnitt vom Kontaktschenkel (2) weg über eine erste Länge von 2 bis 7cm, vorzugsweise aber im wesentlichen von 4cm, und senkrecht dazu über eine zweite Länge von 1 bis 4cm, vorzugsweise von im wesentlichen 2.5cm erstreckt.

## Claims

1. Tarpaulin covering for closing a load space end surface bounded by an end frame and cooperating by overlapping with a lifting platform (4) which can be placed substantially vertically against the end surface, **characterized in that** the tarpaulin covering is in the form of a profile element (1) which can be connected to a tarpaulin (6) and comprises at least one contact limb (2) and an overlap limb (3), the contact limb (2), in the closed state, i.e. with vertically positioned lifting platform, being capable of being fixed, optionally firmly clamped, between the end frame and the lifting platform (4), and the overlap limb (3) projecting away from the end surface over the free end of the lifting platform (4).

2. Tarpaulin covering according to Claim 1, **characterized in that** the profile element (1) for connecting the tarpaulin covering to a tarpaulin (6) comprises a cylindrical groove (8) which is arranged in the connection region of the two limbs (2, 3) and into which the free tarpaulin end having a bead (7) can be inserted.

3. Tarpaulin covering according to Claim 1 or 2, **characterized in that** the overlap limb (3) is substantially L-shaped in cross-section, the overlap limb (3) in the closed state extending substantially horizontally away from the end surface and inclined downwards in a connecting region.

4. Tarpaulin covering according to any of Claims 1 to 3, **characterized in that** a seal (9) which extends substantially over the entire length of the contact limb (2) and, in the closed state, rests tightly against the lifting platform (4) is coordinated with said contact limb (2).

5. Tarpaulin covering according to Claim 4, **characterized in that** the seal (9) is anchored in a sealing groove (10) provided in the contact limb (2) and the seal (9) is in the form of a rubber lip (9') which preferably projects beyond the contact limb (2) and is curved in the direction of the lifting platform (4) adjacent in the closed state.

6. Tarpaulin covering according to any of Claims 1 to 5, **characterized in that** connecting elements (12) are provided on the contact limb (2), in particular outside on both sides, preferably bolts projecting towards the end frame, which, in the closed state, make it possible to achieve an interlocking connection with the end frame.

7. Tarpaulin covering according to any of Claims 1 to 5, **characterized in that** connecting elements (12) are provided on the end frame, in particular on corner posts (13), preferably bolts projecting towards the contact limb (2), which, in the closed state, make it possible to achieve an interlocking connection between contact limbs (2) and end frame and lifting platform (4), the bolts in the form of connecting elements (12) optionally projecting to such an extent that they pass through the profile element (12) and optionally project into recesses in the lifting platform (4) serving as a rear wall in the closed state.

8. Tarpaulin covering according to any of Claims 1 to 7, **characterized in that** the contact limb (2) comprises suspension elements (11) for suspending the profile element (1) on the horizontal girder of the end frame, the suspension elements (11) preferably being arranged in the region of the free end of the contact limb (2) and in particular being in the form of bores.

9. Tarpaulin covering according to any of Claims 1 to 8, **characterized in that** the contact limb (2) extends in cross-section over a length of 5 to 15 cm, but preferably substantially up to 8 cm.

10. Tarpaulin covering according to any of Claims 1 to 9, **characterized in that** the overlap limb (3) extends in cross-section away from the contact limb (2) over a first length of from 2 to 7 cm, but preferably substantially of 4 cm, and perpendicularly thereto over a second length of from 1 to 4 cm, preferably of substantially 2.5 cm.

## Revendications

1. Élément de finition pour bâche, pour la fermeture d'une surface de délimitation d'espace de chargement, délimité par un cadre de délimitation, en coopération avec chevauchement avec une plate-forme levante (4) pouvant être appliquée sensiblement verticalement sur la surface de délimitation, **caractérisé en ce que** la délimitation de bâche est réalisée sous la forme d'un élément profilé (1) susceptible d'être relié à une bâche (6), comprenant au moins une branche de contact (2) et une branche de recouvrement (3), la branche de contact (2), à l'état fermé, c'est-à-dire lorsque la plate-forme levante est placée verticalement, étant susceptible d'être fixée, le cas échéant bloqué par serrage entre le cadre de délimitation et la plate-forme levante (4), et la branche de recouvrement (3) faisant saillie de la surface de délimitation sur l'extrémité libre de la plate-forme levante (4).

2. Élément de finition pour bâche selon la revendication 1, **caractérisé en ce que** l'élément profilé (1) comprend, pour assurer la liaison de la délimitation de bâche à une bâche (6), une rainure de couche-point (8), disposée dans la zone de liaison des deux branches (2, 3), et dans laquelle l'extrémité de bâche libre peut être insérée par un couche-point (7).

3. Élément de finition pour bâche selon la revendication 1 ou 2, **caractérisé en ce que** la branche de recouvrement (3) est à section sensiblement en forme de L, sachant que la branche de recouvrement (3), à l'état de fermeture, s'étend sensiblement horizontalement en s'écartant de la face de délimitation et de façon inclinée vers le bas dans une zone de raccordement.

4. Élément de finition pour bâche selon l'une des revendications 1 à 3, **caractérisé en ce qu'**à la branche de contact (2) est associé un joint d'étanchéité (9), s'étendant sensiblement sur toute sa longueur et appuyant de façon étanche sur la plate-forme levante (4) à l'état fermé.

5. Élément de finition pour bâche selon la revendication 4, **caractérisé en ce que** le joint d'étanchéité (9) est ancré dans une rainure d'étanchéité (10) prévue sur la branche de contact (2), et **en ce que** le joint d'étanchéité (9) est réalisé sous la forme de lèvre en caoutchouc (9') - de préférence ressortant de la branche de contact (2) et incurvée en direction de la plate-forme levante (4) en appui, en état de fermeture.

6. Élément de finition pour bâche selon l'une des revendications 1 à 5, **caractérisé en ce que**, sur la branche de contact (2) - en particulier des deux côtés extérieurement - sont prévus des éléments de liaison (12), de préférence des boulons faisant saillie vers le cadre de délimitation qui, à l'état fermé, permettent d'obtenir une liaison par ajustement de forme avec le cadre de délimitation.

7. Élément de finition pour bâche selon l'une des revendications 1 à 5, **caractérisé en ce que**, sur le cadre de délimitation - en particulier sur les piliers d'angle (13) à l'extérieur - sont prévus des éléments de liaison (12), de préférence des boulons faisant saillie vers la branche de contact (2), qui, à l'état de fermeture, permettent d'obtenir une liaison par ajustement de forme entre la branche de contact (2) et le cadre de délimitation et la plate-forme levante (4), et les boulons, réalisés à titre d'éléments de liaison (12), faisant le cas échéant saillie d'une distance telle qu'ils traversent l'élément profilé (12) et le cas échéant pénètrent dans des évidements ménagés dans la plate-forme levante (4) servant de paroi arrière à l'état fermé.

8. Élément de finition pour bâche selon l'une des revendications 1 à 7, **caractérisé en ce que** la branche de contact (2) comprend des éléments d'accrochage (11) pour accrocher l'élément profilé (1) sur la poutre horizontale du cadre de fermeture, les éléments d'accrochage (11) étant disposés de préférence dans la zone de l'extrémité libre de la branche de contact (2) et réalisés en particulier sous la forme de perçages.

9. Élément de finition pour bâche selon l'une des revendications 1 à 8, **caractérisé en ce que** la branche de contact (2), vue en coupe, s'étend sur une longueur de 5 à 15 cm, de préférence sensiblement jusqu'à 8 cm.

10. Élément de finition pour bâche selon l'une des revendications 1 à 9, **caractérisé en ce que** la branche de recouvrement (3), vue en coupe, s'étend, en s'écartant de la branche de contact (2), sur une première longueur de 2 à 7 cm, de préférence sensiblement de 4 cm et, perpendiculairement à cela, sur une deuxième longueur, de 1 à 4 cm, de préférence sensiblement de 2,5 cm.
